(19) **Europäisches Patentamt European Patent Office Office européen des brevets**

(11) **EP 3 739 355 B1**

(12) **EUROPEAN PATENT SPECIFICATION**

(45) Date of publication and mention
of the grant of the patent:
**25.02.2026 Bulletin 2026/09**

(21) Application number: **19174989.4**

(22) Date of filing: **16.05.2019**

(51) International Patent Classification (IPC):
*G01S 5/12* (2006.01)    *G01S 5/02* (2010.01)
*G01S 5/14* (2006.01)    *H04W 4/029* (2018.01)
*H04W 64/00* (2009.01)

(52) Cooperative Patent Classification (CPC):
**G01S 5/12; G01S 5/0236; G01S 5/0252;
G01S 5/0257; G01S 5/145; H04W 4/02;
H04W 4/44; H04W 64/00**

(54) **DETERMINING ONE OR MORE ROUND-TRIP-TIME POSITIONING SECTIONS**

BESTIMMEN EINES ODER MEHRERER POSITIONIERUNGSABSCHNITTE MIT UMLAUFZEITEN

DÉTERMINATION D'UNE OU DE PLUSIEURS SECTIONS DE POSITIONNEMENT DE TEMPS D'ALLER-RETOUR

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**18.11.2020 Bulletin 2020/47**

(73) Proprietor: **HERE Global B.V.
5611 ZT Eindhoven (NL)**

(72) Inventors:
• **WIROLA, Lauri Aarne Johannes
33100 Tampere (FI)**
• **RAUHALA, Petri
33100 Tampere (FI)**
• **LUOMI, Marko
33100 Tampere (FI)**

(74) Representative: **Sariot, Eray
HERE Global BV
Parnassusweg 715
1077 DG Amsterdam (NL)**

(56) References cited:
**US-A1- 2013 337 847    US-A1- 2014 194 137
US-A1- 2014 253 386    US-A1- 2018 120 410**

## Description

### FIELD OF THE DISCLOSURE

The invention relates to the field of radio positioning and more specifically to determining one or more round-trip-time positioning sections.

### BACKGROUND

Satellite signal based positioning technologies, which are mainly used outdoors, are usually not suited to deliver a satisfactory performance when used for indoor positioning of a mobile device, since satellite signals of global navigation satellite systems (GNSS), like the global positioning system (GPS) or the Galileo system, do not penetrate through walls and roofs strongly enough for an adequate signal reception indoors. Thus, these positioning technologies are not able to deliver a performance indoors that would enable seamless, equal and accurate navigation experience outdoors and indoors.

Therefore, several dedicated non-GNSS based radio positioning systems for indoor and outdoor positioning have been developed and commercially deployed during the past years. Examples comprise systems that are based on pseudolites, which are ground based GPS-like short-range beacons, ultra-sound positioning systems, Bluetooth low energy (BLE) based positioning systems, cellular network based positioning systems and wireless local area network (WLAN) based positioning systems.

In most existing non-GNSS based radio positioning systems, a position of a mobile device may be estimated at least partially based on radio signals observed by the mobile device and radio map information representing a radio map containing radio models (e.g. indicating expected coverage areas or radio-signal-strength fields) of radio devices transmitting the radio signals observed by the mobile device. For example, if the mobile device observes radio signals from three radio devices, it may be estimated that the position of the mobile device is within an area in which it is expected at least partially based on the radio map that radio signals from these three radio devices are observable (e.g. an area defined by an overlap of the expected coverage areas or radio-signal-strength fields of these three radio devices).

Related prior art is disclosed in the publications US2014253386A1, US2014194137A1, US2018120410A1, and US2013337847A1.

### SUMMARY OF SOME EMBODIMENTS OF THE INVENTION

The scope of protection of the present patent is defined by the attached claims, in particular the claims 1, 11, 12 and 13. Below are presented embodiments of the invention that are exemplary only, and which, if they do not include all the features of at least one claim, do not determine the scope of protection of this patent.

Estimating of a position of a mobile device may be assisted by round-trip-times associated with radio signals observed by the mobile device if the mobile device and/or the radio devices transmitting the radio signals support such a round-trip-time based positioning. It is thus an object of the present invention to determine one or more round-trip-time positioning sections, in particular to determine one or more round-trip-time positioning sections of an environment covered by an existing radio map.

According to an exemplary aspect of the invention, a method is disclosed, wherein the method comprises:

- obtaining or holding available radio map information representing a radio map representing a plurality of radio models for a plurality of radio devices, wherein each of the plurality of radio models is indicative of an expected radio-signal-strength field of a radio signal transmitted by a respective radio device of the plurality of radio devices;
- determining, at least partially based on the radio map information, one or more round-trip-time positioning sections of an environment covered by the radio map;
- providing round-trip-time positioning information causing estimating a position of a mobile device at least partially based on round-trip-times associated with radio signals observed by the mobile device within one of the one or more round-trip-time positioning sections of the environment covered by the radio map.

The disclosed method may be performed by an apparatus. For example, the apparatus may be part of a radio positioning system (e.g. the below disclosed radio positioning system). In particular, the apparatus may be a server of the radio positioning system.

The plurality of radio devices may be part of a radio positioning system (e.g. the below disclosed radio positioning system). By way of example, the plurality of radio devices and the apparatus performing the disclosed method may be part of the same radio positioning system (e.g. the below disclosed radio positioning system). For example, each of the plurality of radio devices is fixedly installed at a respective installation position, for example in the environment covered by the radio map or adjacent to the environment covered by the radio map. In particular, each of the plurality of radio devices may be fixedly installed at a respective installation position such that a respective radio signal transmitted by each of the plurality of radio devices is observable at one or more positions within the environment covered by the radio map.

Obtaining the radio map information representing the radio map may be understood to mean that the radio map information is received, for example received by the apparatus performing the disclosed method from another apparatus. Alternatively or additionally, the radio map information representing the radio map may be obtained as a result of generating or updating the radio map information representing the radio map.

Holding available the radio map information may be understood to mean that the radio map information is stored in a memory (e.g. a memory of the apparatus performing the disclosed method).

The environment covered by the radio map may be understood to be an environment in which the mobile device may be enabled to estimate its position based on the radio map. An example of such an environment is (1) an outdoor environment (e.g. an urban space or region) or (2) an indoor environment (e.g. a building or a complex of buildings) or (3) a combination thereof. Each of the one or more round-trip-time positioning sections of the environment covered by the radio map may be understood to be a respective part of the environment covered by the radio map.

The radio map may be configured to enable the mobile device (e.g. a plurality of mobile devices comprising the mobile device) to estimate its position at least partially based on this radio map when the mobile device is located in an environment covered by the radio map. To this end, the radio map may represent the plurality of radio models for the plurality of radio devices. Each radio model of the plurality of radio models may be indicative of the respective radio coverage area for the respective radio device of the plurality of radio devices within which it is expected that a radio signal transmitted by the respective radio device of the plurality of radio devices is observable (e.g. receivable by the mobile device with a minimum quality, e.g. a minimum signal-to-noise ratio and/or a minimum radio-signal-strength, e.g. at least -90 dBm or -95 dBm). Nevertheless, it is to be understood that the real radio coverage area of such a radio device may deviate from the expected radio coverage area as indicated by such a radio model. If the mobile device observes one or more radio signals transmitted by one or more of the plurality of radio devices at a certain observation position, it may for example estimate the observation position to be the position (or to be in the area) where the radio coverage(s) indicated by the radio model(s) of the one or more of the plurality of radio devices as represented by the radio map overlap.

That each of the plurality of radio models is indicative of an expected radio-signal-strength field of a radio signal transmitted by a respective radio device of the plurality of radio devices may be understood to mean that each of the plurality of radio models represents or enables determining an expected radio-signal-strength field of a radio signal transmitted by a respective radio device of the plurality of radio devices.

Each expected radio-signal-strength field indicated by the plurality of radio models may be understood to be indicative of an expected radio-signal-strength value of a radio signal transmitted by a respective radio device of the plurality of radio devices at one or more positions (e.g. at any position or at any position of a plurality of predetermined positions like a predetermined grid of positions) in the environment covered by the radio map. Accordingly, each of the plurality of radio models may be understood to be indicative of an expected radio-signal-strength field if it is indicative of (e.g. represents or enables determining) an expected radio-signal-strength value of a radio signal transmitted by a respective radio device of the plurality of radio devices at one or more positions (e.g. at any position or at any position of a plurality of predetermined positions like a predetermined grid of positions) in the environment covered by the radio map. To this end, each of the plurality of radio models may represent at least one of (1) the expected radio-signal-strength value of a radio signal transmitted by a respective radio device of the plurality of radio devices at one or more positions (e.g. at any position or at any position of a plurality of predetermined positions like a predetermined grid of positions) in the environment covered by the radio map or (2) the expected path-loss (and, optionally, transmission power) of a radio signal transmitted by a respective radio device of the plurality of radio devices or (3) a combination thereof. It is to be understood that the expected radio-signal-strength field indicated by such a radio model may however deviate from the real radio-signal-strength field. To give a non-limiting example, such a radio model may be a soft-boundary model like a parametric model or a grid model.

A parametric model of a certain radio device may represent or comprise one or more radio transmission parameters (e.g. path-loss exponent and transmission power) indicative of the expected propagation or path-loss of a radio signal transmitted by this radio device. An example of a parametric model of a certain radio device is a path-loss model for a radio signal transmitted by this radio device. In this example, the radio transmission parameters represented by the parametric model may comprise a path-loss exponent, a transmission power value used by the transmitter of this radio device and an installation position of this radio device (e.g. in the form of geographical coordinates like longitude and latitude of a global coordinate system, for example coordinates according to WGS-84 (World Geodetic System 1984)).

A grid model (e.g. a radio-signal-strength grid model) of a certain radio device represents an expected radio-signal-strength field of a radio signal transmitted by this radio device by representing an expected radio-signal-strength value of a radio signal transmitted by this radio device at a plurality of predetermined positions like a predetermined grid of positions. An example of such a grid model is a radio image like a radio-signal-strength heatmap.

Determining one or more round-trip-time positioning sections of the environment covered by the radio map may be performed according to predetermined rules (e.g. a predetermined algorithm). In particular, each of the one or more round-trip-time positioning sections of the environment covered by the radio map may be determined at least partially based on the radio map information according to such predetermined rules (e.g. a predetermined algorithm) such that it is expected that round-trip-time based positioning is possible (e.g. with a predetermined or desired minimum accuracy) in each of these one or more round-trip-time positioning sections of the environment covered by the radio map.

That the determining is at least partially based on the radio map information may be understood to mean that the determining is based on at least one of (1) the radio map information, (2) the radio map represented by the radio map information, (3) one or more of the plurality of radio models represented by the radio map or (4) a combination thereof. For example, at least one of (1) the radio map information, (2) the radio map represented by the radio map information, (3) one or more of the plurality of radio models represented by the radio map or (4) a combination thereof may be used as input parameter of the determining. It is however to be understood that further information may be used as input parameters of the determining as well.

As disclosed above, each of the plurality of radio models represented by the radio map represented by the radio map information is indicative of an expected radio-signal-strength field of a radio signal transmitted by a respective radio device of the plurality of radio devices. Accordingly, the one or more round-trip-time positioning sections of the environment covered by the radio map may be determined at least partially based on the expected radio-signal-strength field indicated by the radio map.

Since accuracy of round-trip-time based positioning depends on quality of the observed radio signals and the expected radio-signal-strength of a radio signal may be considered to be indicative of quality of a radio signal, using the radio map information representing the radio map representing the plurality of radio models may allow to only determine sections of the environment to be one or more round-trip-time positioning sections of the environment within which it is expected that radio signals having a minimum quality (e.g. a minimum radio-signal-strength value) are observable. Moreover, the radio-signal-strength field represented by such a radio model may be considered to be also indicative of the installation position of the radio device, and thus using the radio map information representing the radio map representing the plurality of radio models may also allow to consider the geometry (e.g. spatial distribution) of the installation positions of the plurality of radio devices within the environment when determining the one or more round-trip-time positioning sections of the environment. The geometry (e.g. spatial distribution) of the installation positions of the plurality of radio devices within the environment may also have an impact on the accuracy of round-trip-time based positioning, for example the more evenly the plurality of devices are spatially distributed in a certain section of the environment the higher may be the accuracy of round-trip-time based positioning in this section of the environment.

The round-trip-time positioning information may be provided for further processing, for example by the apparatus performing the disclosed method or another apparatus (e.g. the mobile device). In the first example, providing the round-trip-time positioning information may for example be understood to mean that the round-trip-time positioning information is held available such that it can be further processed (e.g. adding the round-trip-time positioning information to the radio map information) by the apparatus performing the disclosed method (e.g. by storing the round-trip-time positioning information in a memory of the apparatus of the disclosed method); and, in the second example, providing the round-trip-time positioning information may for example be understood to mean that the round-trip-time positioning information is transmitted (e.g. alone or together with the radio map information) to the other apparatus (e.g. the mobile device) such that it can be further processed (e.g. used for round-trip-time based positioning) by the other apparatus (e.g. the mobile device).

That the round-trip-time positioning information cause estimating a position of the mobile device at least partially based on round-trip-times associated with radio signals observed by the mobile device within one of the one or more round-trip-time positioning sections of the environment may be understood to mean that the round-trip-time information are configured to control an apparatus (e.g. the apparatus performing the disclosed method or another apparatus like the mobile device) to which the round-trip-time positioning information is provided to estimate a position of the mobile device at least partially based on round-trip-times associated with radio signals observed by the mobile device if these radio signals are observed by the mobile device within one of the one or more round-trip-time positioning sections of the environment. To this end, the round-trip-time positioning information may be indicative of the round-trip-time positioning sections of the environment, for example by representing the one or more round-trip-time positioning sections of the environment (e.g. by representing geographic coordinates defining the one or more round-trip-time positioning sections of the environment) or by identifying the radio devices of the plurality of radio devices transmitting radio signals that are expected to be observable at one or more positions within one or more round-trip-time positioning sections of the environment.

To enable such a round-trip-time based positioning, the mobile device and the plurality of radio devices may be configured to support round-trip-time based positioning. Without limiting the scope of the present invention, the mobile device and the plurality of radio devices may for example support wireless local area network (WLAN) according to the IEEE 802.11mc standard which specifies a solution for determining round-trip-time values between two WLAN devices (e.g. a radio device in form of a WLAN access point and a mobile device). Accordingly, the round-trip-times associated with radio signals observed by the mobile device may be determined according to IEEE 802.11mc standard. The specification of the IEEE 802.11mc standard (i.e. IEEE Std 802.11-2016) is presently available from: https://ieeexplore.ieee.org/document/7786995.

A more detailed example of how a position of the mobile may be estimated based on round-trip-times associated with radio signals observed is disclosed below.

According to a further exemplary aspect of the invention, an apparatus is disclosed, wherein the apparatus comprises means for performing the steps of any one embodiment of the disclosed method or a part thereof (e.g. at least some steps of any one embodiment of the disclosed method).

The means of the disclosed apparatus can be implemented in hardware and/or software. They may comprise for instance at least one processor for executing computer program code (e.g. computer program code as disclosed below) for realizing the required functions, a memory storing the computer program code, or both. Alternatively, they could comprise for instance circuitry that is designed to realize the required functions, for instance implemented in a chipset or a chip, like an integrated circuit. The disclosed apparatus may comprise a single means for all functions, a common plurality of means for all functions, or a plurality of different means for different functions.

According to a further exemplary aspect of the invention, an apparatus is disclosed, wherein the apparatus comprises at least one processor and at least one memory containing computer program code (e.g. computer program code as disclosed below), the at least one memory and the computer program code with the at least one processor configured to cause the apparatus at least to perform any one embodiment of the disclosed method (e.g. the steps of any one embodiment of the disclosed method) or a part thereof (e.g. at least some steps of any one embodiment of the disclosed method).

For example, the disclosed apparatus(s) may be (a) module(s) or component(s) for (a) device(s), for example (a) chip(s) or chipset(s). Alternatively, the disclosed apparatus(es) may be (a) device. Examples of such (a) device(s) are (1) a mobile device, (2) a server like a positioning server and (3) a plurality of servers (e.g. forming a server cloud like a positioning server cloud).

It is to be understood that the disclosed apparatus(es) may comprise only the disclosed components (e.g. means) or may further comprise one or more additional components (e.g. means). Examples of such additional components are a radio interface (e.g. a receiver, a transmitter and/or a transceiver), a data interface, a user interface (e.g. a touch-sensitive display, a keyboard, a touchpad, a display, etc.), a sensor, etc.

According to a further exemplary aspect of the invention, a radio positioning system is disclosed which comprises the plurality of radio devices and at least one of the disclosed apparatus(es). For example, the apparatus may be a server like a positioning server or part of a plurality of servers like a positioning server cloud.

According to a further exemplary aspect of the invention, a non-transitory computer readable storage medium is disclosed, in which computer program code is stored. The computer program code causes an apparatus to perform any one embodiment of the disclosed method (e.g. the steps of any one embodiment of the disclosed method) when executed by a processor or by a plurality of processors of the apparatus. The computer program code could be stored in the computer readable storage medium in the form of instructions encoding the computer-readable storage medium. The computer readable storage medium may be intended for taking part in the operation of an apparatus, like an internal or external hard disk of the device, or be intended for distribution of the computer program code, like an optical disc.

According to a further exemplary aspect of the invention, a computer program code is disclosed, the computer program code when executed by a processor (or by a plurality of processors) of an apparatus causing the apparatus to perform any one embodiment of the disclosed method (e.g. the steps of any one embodiment of the disclosed method).

The disclosed method, apparatus(es), system, non-transitory computer readable storage medium and computer program code may be for determining one or more round-trip-time positioning sections, in particular for determining one or more round-trip-time positioning sections of an environment covered by an existing radio map.

In the following, further features and embodiments of these exemplary aspects of the invention will be described.

According to the invention, the one or more round-trip-time positioning sections of the environment covered by the radio map are determined such that at least one of the following conditions is met for each of the one or more round-trip-time positioning sections:

(1) at least a predetermined number of radio signals having a radio-signal-strength value exceeding or being equal to a predetermined radio-signal-strength threshold is expected to be observable within the respective round-trip-time positioning section of the one or more round-trip-time positioning sections;

(2) a maximum dilution-of-precision value for the respective round-trip-time positioning section of the one or more round-trip-time positioning sections is expected to be less than or equal to a predetermined dilution-of-precision threshold.

Regarding the first condition, the predetermined number of radio signals and the predetermined radio-signal-strength threshold may be predetermined (e.g. predefined) such that it is expected that round-trip-time based positioning is possible (e.g. with a predetermined or desired minimum accuracy) in each of one or more round-trip-time positioning sections meeting the first condition (e.g. alone or at least in combination with the second condition). For example, the predetermined radio-signal-strength threshold is a minimum radio-signal-strength value (e.g. -60 dBm or -65 dBm) and the predetermined number of radio signals is a minimum number of radio signals (e.g. 3, 4 or 5).

For example, each of the radio signals of the at least predetermined number of radio signals is transmitted by a different radio device of the plurality of radio devices.

As disclosed above, each expected radio-signal-strength field indicated by the plurality of radio models may be understood to be indicative of an expected radio-signal-strength value of a radio signal transmitted by a respective radio device of the plurality of radio devices at one or more positions (e.g. at any position or at any position of a plurality of predetermined positions like a predetermined grid of positions) in the environment covered by the radio map. Accordingly, the first condition disclosed above may for example be considered to be met for each of the one or more round-trip-time positioning sections if at least the predetermined number of radio signals having a radio-signal-strength value exceeding or being equal to a predetermined radio-signal-strength threshold is expected to be observable at one or more positions (e.g. at any position or at any position of a plurality of predetermined positions like a predetermined grid of positions) within each of the one or more round-trip-time positioning sections of the environment covered by the radio map.

To determine the one or more round-trip-time positioning sections of the environment covered by the radio map such that the first condition is met, the method may comprise at least one of:

- determining, for one or more positions (e.g. any position or any position of a plurality of predetermined positions like a predetermined grid of positions) within the environment covered by the radio map, a respective number of radio signals transmitted by the plurality of radio devices which is expected to be observable with a radio-signal-strength value exceeding or being equal to the predetermined radio-signal-strength threshold; and
- determining the one or more round-trip-time positioning sections such that the one or more round-trip-time positioning sections only comprise the one or more positions within the environment covered by the radio map for which it is determined that the respective number of radio signals transmitted by the plurality of radio devices which is expected to be observable with a radio-signal-strength value exceeding or being equal to the predetermined radio-signal-strength threshold is equal to or exceeds the predetermined number of radio signals.

As disclosed above, each of the plurality of radio models may be understood to be indicative of an expected radio-signal-strength field if it is indicative of (e.g. represents or enables determining) an expected radio-signal-strength value of a radio signal transmitted by a respective radio device of the plurality of radio devices at one or more positions (e.g. at any position or at any position of a plurality of predetermined positions like a predetermined grid of positions) in the environment covered by the radio map. Accordingly, the respective number of radio signals transmitted by the plurality of radio devices which is expected to be observable with a radio-signal-strength value exceeding or being equal to the predetermined radio-signal-strength threshold may be determined for the one or more positions (e.g. any position or any position of a plurality of predetermined positions like a predetermined grid of positions) at least partially based on the plurality of radio models.

Regarding the second condition disclosed above, dilution-of-precision (DOP) may be understood to be geometric dilution-of-precision (GDOP) or a positional dilution-of-precision (PDOP) which are a function of the relative geometry of installation positions of the plurality of radio devices and may be considered as accuracy metric for round-trip-time based positioning solutions. It is however to be understood that the invention is not limited to geometric dilution-of-precision (GDOP) or positional dilution-of-precision (PDOP).

The predetermined dilution-of-precision threshold may be predetermined (e.g. predefined) such that it is expected that round-trip-time based positioning is possible (e.g. with a predetermined or desired minimum accuracy) in each of one or more round-trip-time positioning sections meeting the second condition (e.g. alone or at least in combination with the first condition). For example, the predetermined dilution-of-precision threshold may be understood to be a maximum dilution-of-precision (DOP) value. In particular, the predetermined dilution-of-precision threshold may be understood to be a maximum geometric dilution-of-precision (GDOP) value or a maximum positional dilution-of-precision (PDOP) value. Therein, a DOP (e.g. GDOP or PDOP) value of 1 may be considered to be optimal (e.g. a predetermined or desired minimum accuracy of round-trip-time based positioning may be expected to be met), a DOP value of 1 to 5 may be considered to be sufficient (e.g. a predetermined or desired minimum accuracy of round-trip-time based positioning may still be expected to be met) and a DOP value greater than 5 may be considered to be insufficient (e.g. a predetermined or desired minimum accuracy of round-trip-time based positioning may not be expected to be met). Accordingly, the predetermined dilution-of-precision threshold may be a maximum DOP (e.g. GDOP or PDOP) value within the range of 1 to 5, for example a maximum DOP (e.g. GDOP or PDOP) value of 2, 2.5, 3 or 4, to name a few non-limiting examples.

The maximum DOP (e.g. GDOP or PDOP)value for a respective round-trip-time positioning section of the one or more round-trip-time positioning sections may be understood to be the greatest DOP value at one or more (e.g. at any position or at any position of a plurality of predetermined positions like a predetermined grid of positions) within the respective round-trip-time positioning section of the one or more round-trip-time positioning sections. As disclosed above, dilution-of-precision (DOP) may be understood to be geometric dilution-of-precision (GDOP) or a positional dilution-of -precision (PDOP) which are a function of the relative geometry of the installation positions of the plurality of radio devices and may be considered as accuracy metric for round-trip-time based positioning solutions. Respective expected DOP (e.g. GDOP or PDOP) values for the one or more positions (e.g. any position or any position of a plurality of predetermined positions like a predetermined grid of positions) within the environment covered by the radio map may for example be determined (e.g. estimated and/or computed) as outlined in the article "Dilution of precision." (i.e. " Langley, Richard B. "Dilution of precision." GPS world 10.5 (1999): 52-59.") in the context of GPS..

To determine the one or more round-trip-time positioning sections of the environment covered by the radio map such that the second condition is met, the method may comprise at least one of:

- determining, for one or more positions (e.g. any position or any position of a plurality of predetermined positions like a predetermined grid of positions) within the environment covered by the radio map, a respective expected dilution-of-precision value; and
- determining the one or more round-trip-time positioning sections such that the one or more round-trip-time positioning sections only comprise the one or more positions within the environment covered by the radio map for which it is determined that the respective expected dilution-of-precision value is less than or equal to the predetermined dilution-of-precision threshold.

Therein, the respective expected DOP (e.g. GDOP or PDOP) values for the one or more positions (e.g. any position or any position of a plurality of predetermined positions like a predetermined grid of positions) within the environment covered by the radio map may for example be determined (e.g. estimated and/or computed) as outlined in the above-cited article "Dilution of precision." (i.e. " Langley, Richard B. "Dilution of precision." GPS world 10.5 (1999): 52-59.").

The DOP (e.g. GDOP or PDOP) values for the one or more positions (e.g. any position or any position of a plurality of predetermined positions like a predetermined grid of positions) may be determined at least partially based on the installation positions of the plurality of radio devices.

According to an exemplary embodiment of the invention, the method further comprises:

- determining, at least partially based on the radio map information, a respective installation position for each of the plurality of radio devices.

For example, the determining a respective installation position for each of the plurality of radio devices may be based on the assumption that a radio-signal-strength value of a radio signal transmitted by a respective radio device of the plurality of radio device is greatest at the respective installation position of the respective radio device of the plurality of radio devices. Accordingly, a respective installation position for each of the plurality of radio devices may be determined by determining, for each of the plurality of radio devices, a position at which the radio-signal-strength value of a radio signal transmitted by the respective radio device of the plurality of radio devices is expected to be greatest. In particular, the determining may be based on the plurality of radio models each of which may be understood to be indicative of (e.g. represents or enables determining) an expected radio-signal-strength value of a radio signal transmitted by a respective radio device of the plurality of radio devices at one or more positions (e.g. at any position or at any position of a plurality of predetermined positions like a predetermined grid of positions) in the environment covered by the radio map. For example, a respective installation position of a certain radio device may be determined based on a grid model (e.g. a radio-signal-strength grid model) of this radio device.

According to an exemplary embodiment of the invention, the radio map information is indicative of a respective installation position for each of the plurality of radio devices. This may be understood to mean that the radio map information enables determining of or represents a respective installation position for each of the plurality of radio devices.

As disclosed above, a grid model (e.g. a radio-signal-strength grid model) of a certain radio device may be understood to enable determining a respective installation position of this radio device.

As further disclosed above, the parameters represented by a parametric model of a certain radio device (e.g. a path-loss model for a radio signal transmitted by this radio device) may comprise a path-loss exponent, a transmission power value used by the transmitter of this radio device and an installation position of this radio device. The installation position may for example be represented in the form of geographical coordinates.

According to an exemplary embodiment of the invention, one or more (e.g. each) of the plurality of radio devices is configured to support round-trip-time based positioning. This may be understood to mean that the one or more (e.g. each) of the plurality of radio devices is configured to cooperate with the mobile device such that the mobile device or the respective radio device of the plurality of radio devices is enabled to determine a respective round-trip-time associated with a radio signal transmitted by the respective radio device of the plurality of radio devices. To this end, a respective radio device of the plurality of radio devices may be understood to be configured to support round-trip-time based positioning by being configured to capture at least one of (1) time-of-arrival of a received radio signal and (2) time-of-departure of a transmitted radio signal and to communicate the captured time(s) to the mobile device as disclosed below in more detail.

As disclosed above, the mobile device and the plurality of radio devices may support wireless local area network (WLAN) according to the IEEE 802.11mc standard to enable a round-trip-time based positioning. Accordingly, the one or more (e.g. each) of the plurality of radio devices may be understood to be configured to support round-trip-time based positioning if they support WLAN according to the IEEE 802.11mc standard.

According to an exemplary embodiment of the invention, the radio map information is indicative of which radio devices of the plurality of radio devices are configured to support round-trip-time based positioning.

This may be understood to mean that the radio map information represent or enable determining which radio devices of the plurality of radio devices are configured to support round-trip-time based positioning.

According to an exemplary embodiment of the invention, the method further comprises:

- updating the radio map information by adding the round-trip-time positioning information to the radio map information.

This may be understood to mean that the round-trip-time positioning information is part of the updated radio map information obtained as a result of the updating.

According to an exemplary embodiment of the invention, the method further comprises:

- estimating the position of the mobile device at least partially based on round-trip-times associated with radio signals observed by the mobile device within one of the one or more round-trip-time positioning sections.

The mobile device may be understood to be within one of the one or more round-trip-time positioning sections if the mobile device observes the radio signals at an observation position which is within one of the one or more round-trip-time positioning sections or which is estimated to be within one of the one or more round-trip-time positioning sections (e.g. estimated to be within one of the one or more round-trip-time positioning sections based on the observed radio signals and the radio map represented by the radio map information, but not based on round-trip-times associated with the observed radio signals).

A round-trip-time associated with a radio signal observed by the mobile device may be understood to be a round-trip-time (RTT) value. A RTT value may represent the round-trip-time period it took for a first radio signal to travel from the mobile device located at an observation position to a respective radio device of the plurality of radio devices installed at a respective installation position and for a second radio signal to travel from the respective radio device to the mobile device. Accordingly, the RTT value of a radio signal travelling between the mobile device (and/or the respective observation position) and the respective radio device (and/or the respective installation position) may be determined by the following equation:

$$RTT = (t_4 - t_1) - (t_3 - t_2)$$

where $t_1$ is the time-of-departure of the first radio signal from the mobile device located at the respective observation position, $t_4$ is the time-of-arrival of the second radio signal at the mobile device, $t_3$ is the time-of-departure of the second radio signal from the respective radio device installed at the respective installation position and $t_2$ is the time-of-arrival of the first radio signal at the respective radio device. For example, the mobile device located at the respective observation position and the respective radio device installed at the respective installation position may capture the respective times-of-arrival and times-of-departure. Alternatively or additionally, they may capture the time difference between the respective time-of-arrival and time-of-departure, for example the mobile device may capture the time difference between the time-of-departure of the first radio signal and the time-of-arrival of the second radio signal (i.e. $(t_4 - t_1)$) and the radio device may capture the time difference between the time-of-departure of the first radio signal and the time-of-arrival of the second radio signal (i.e. $(t_3 - t_2)$]. To enable the mobile device to determine the round-trip-time value, the respective radio device may communicate at least one of (1) the time-of-departure (i.e. $t_3$) of the second radio signal from the respective radio device and the time-of-arrival (i.e. $t_2$) of the first radio signal at the respective radio device to the mobile device or (2) the time difference between the time-of-arrival of the first radio signal and the time-of-departure of the second radio signal (i.e. $(t_3 - t_2)$). Alternatively, the respective radio device may transmit the first radio signal and the mobile device may transmit the second radio signal. Both alternatives are to be understood to be within the scope of the present invention.

As disclosed above, the mobile device and the plurality of radio devices may support wireless local area network (WLAN) according to the IEEE 802.11mc standard to enable a round-trip-time based positioning. Accordingly, the RTT value of a radio signal travelling between the mobile device (and/or the respective observation position) and the respective radio device (and/or the respective installation position) may be determined according to the IEEE 802.11mc standard.

Based on the RTT value, the pseudo-distance between the mobile device (and/or the respective observation position) and the respective radio device of the plurality of radio devices (and/or the respective installation position) may be determined by the following equation:

$$d = RTT \cdot \frac{c}{2}$$

where d is the pseudo-distance and c is the speed of light. Since the real distance between the mobile device (and/or the respective observation position) and the respective radio device of the plurality of radio devices (and/or the respective installation position) may deviate from the pseudo-distance due to uncertainties like measurement errors, the distance determined based on this equation is referred to as pseudo-distance. Based on at least three pseudo-distances between the mobile device and three different radio devices of the plurality of radio devices and the installation positions of these at least three different radio devices of the plurality of radio devices, the observation position of the mobile device may be estimated by trilateration or multilateration.

Accordingly, it may be necessary that the mobile device observes at least three radio signals transmitted by different radio devices of the plurality of radio devices at an observation position for estimating the observation position of the mobile device based on round-trip-times associated with these at least three radio signals. Moreover, it may be necessary for estimating the observation position of the mobile device based on round-trip-times associated with these at least three radio signals that the mobile device and the different radio devices are configured to support round-trip-time based positioning, for example by being configured to capture at least one of (1) time-of-arrival of a received radio signal and (2) time-of-departure of a transmitted radio signal and to communicate the captured time(s) to the other one of the mobile device and the different radio devices as disclosed above in more detail.

According to an exemplary embodiment of the invention, the method further comprises:

- at least one of receiving or collecting a plurality of radio observation reports captured by one or more mobile devices within the environment covered or to be covered by the radio map;
- generating or updating the radio map information at least partially based on the plurality of radio observation reports.

Each radio observation report of the plurality of radio observation reports may represent at least one of (1) an observation position, (2) one or more radio signals observed by the mobile device at the observation position, (3) one or more radio signal parameters of the observed one or more radio signals measured by the mobile device or (4) a combination thereof. Accordingly, a respective radio observation report of the plurality of radio observation reports may be understood to be captured by a respective mobile device of the one more mobile devices within the environment covered or to be covered by the radio map when the observation position is within this environment such that the radio signals are/were observed by the mobile device within this environment.

A respective radio observation report of the plurality of radio observation reports captured by a respective mobile device of the one or more mobile devices may be reported from the respective mobile device to the apparatus performing the disclosed method. Accordingly, receiving the plurality of radio observation reports may be understood that the plurality of radio observation reports is received (e.g. subsequently) from the one or more mobile devices.

Collecting the plurality of radio observation reports may be understood to mean that the plurality of radio observation reports (e.g. the plurality of radio observation reports that have been previously received) is held available, for example by storing the radio observation reports in a memory (e.g. a memory of the apparatus performing the disclosed method).

The plurality of radio observation reports may be used for generating the radio map information representing the radio map covering the environment, for example if no radio map information exist; alternatively, the plurality of radio observation reports may be used for updating already existing radio map information representing the radio map covering the environment. The generating or updating may be based radio map generation or updating algorithms, which may for example enable determining of the plurality of radio models represented by the radio map at least partially based on the plurality of radio observation reports.

According to an exemplary embodiment of the invention, the radio map information has been generated at least partially based on a plurality of radio observation reports captured by one or more mobile devices (e.g. the above disclosed plurality of radio observation reports).

According to an exemplary embodiment of the invention, the plurality of radio devices comprises one or more of the following:

- a Bluetooth® radio device like a Bluetooth beacon;
- a WLAN radio device like an access point of a WLAN;
- a cellular radio device like a base station of a cellular communication network.

A Bluetooth radio device may comprise a Bluetooth and/or Bluetooth low energy (BLE) radio interface, which includes at least a Bluetooth and/or BLE transmitter. The Bluetooth and/or BLE transmitter may also be a part of a Bluetooth and/or BLE transceiver. The Bluetooth and/or BLE radio interface may be configured to transmit Bluetooth and or BLE radio signals. A Bluetooth radio device that is employed for the present invention may be any kind of Bluetooth beacon. The Bluetooth standards are specified by the Bluetooth Special Interest Group and are presently available under https://www.bluetooth.com/.

Such Bluetooth radio devices like Bluetooth beacons can be easily installed at various installation positions and require little to no maintenance. Also, Bluetooth technologies are supported by many mobile devices by default such as most smartphones, most tablet computers, most notebook computers, most smart watches and most smart bands, etc. Using Bluetooth radio devices may thus have the effect that many mobile devices may be able to receive radio signals transmitted by or communicate with the Bluetooth radio devices without any adaptation of hardware. As a result, the approach may be globally scalable and have low maintenance and deployment costs. The Bluetooth radio devices may be stand-alone devices or be integrated into or attached to some other devices. Bluetooth radio devices, in particular in low energy mode, require comparably little energy and the use of Bluetooth low energy may enable a positioning with limited energy consumption at all involved devices.

A WLAN radio device may comprise a WLAN radio interface, which for example includes a WLAN transceiver. The WLAN radio interface may be configured to transmit and/or receive WLAN radio signals. Accordingly, the radio signal transmitted by such a WLAN radio device may be a WLAN radio signal. A WLAN radio device that is employed for the present invention may be any kind of WLAN access point. WLAN is for example specified by the standards of the IEEE 802.11 family (http://www.ieee.org/). In particular, the IEEE 802.11mc standard specifies a solution for determining round-trip-time values associated with (a) WLAN radio signal(s) travelling between two WLAN devices, like a WLAN access point and a mobile device.

A cellular radio device may comprise a cellular radio interface, which for example includes a cellular transceiver. The cellular radio interface may be configured to transmit and/or receive cellular radio signals. Accordingly, the radio signal transmitted by such a cellular radio device may be a cellular radio signal. A cellular radio device that is employed for the present invention may for example be a base station of a cellular communication network like a 2G/3G/4G/5G cellular communication network. The 2G/3G/4G/5G cellular radio communication standards are developed by the 3GPP and presently available under http://www.3gpp.org/.

Like Bluetooth technologies, WLAN and cellular technologies are supported by many mobile devices by default such as most smartphones, most tablet computers, most notebook computers, most smart watches and most smart bands, etc. Thus, using WLAN radio devices or cellular radio devices may have the same effects like using Bluetooth radio devices.

According to an exemplary embodiment of the invention, the method is performed by a server, for example a server (e.g. a positioning server) of a positioning system comprising the plurality of radio devices and the server.

It is to be understood that the presentation of the invention in this section is merely by way of examples and non-limiting.

Other features of the invention will become apparent from the following detailed description considered in conjunction with the accompanying drawings. It is to be understood, however, that the drawings are designed solely for purposes of illustration and not as a definition of the limits of the invention, for which reference should be made to the appended claims. It should be further understood that the drawings are not drawn to scale and that they are merely intended to conceptually illustrate the structures and procedures described herein.

**BRIEF DESCRIPTION OF THE FIGURES**

| | |
|---|---|
| Fig. 1 | is a block diagram of an exemplary embodiment of a system according to the invention; |
| Fig. 2 | is a block diagram of an exemplary embodiment of an apparatus according to the invention; |
| Fig. 3 | is a block diagram of an exemplary embodiment of a radio device; |
| Fig. 4 | is a block diagram of an exemplary embodiment of a mobile device; |
| Fig. 5 | is a flow chart illustrating an exemplary embodiment of a method according to the invention; |
| Fig. 6a - 6c | are exemplary embodiments of a radio map according to the invention; and |
| Fig. 7 | is a schematic illustration of examples of tangible and non-transitory storage media according to the invention. |

**DETAILED DESCRIPTION OF THE FIGURES**

The following description serves to deepen the understanding of the present invention and shall be understood to complement and be read together with the description of example embodiments of the invention as provided in the above SUMMARY section of this specification.

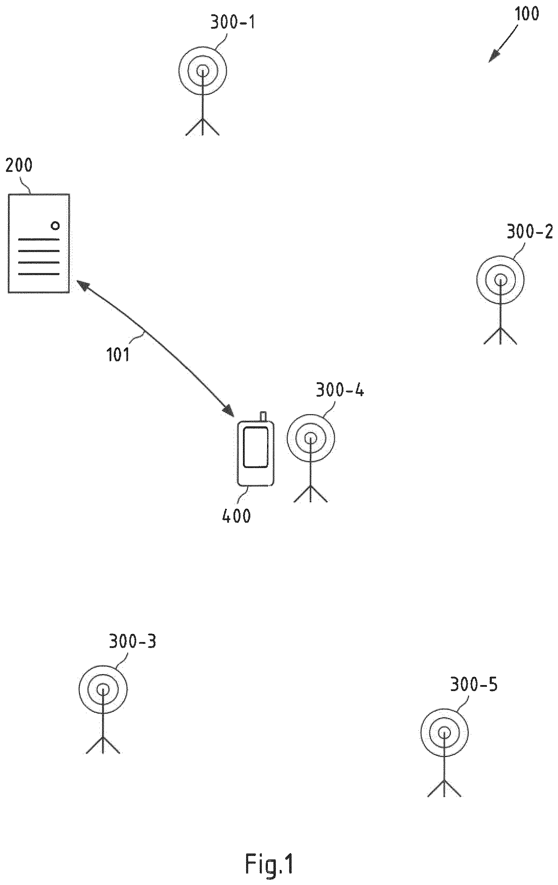

Fig. 1 is a schematic high-level block diagram of a system 100 according to an exemplary aspect of the invention. In the following, it is assumed that system 100 is an indoor radio positioning system for an indoor environment.

The indoor environment of system 100 is for example inside a building or a complex of buildings like a shopping center, a parking garage, an airport, a company site, etc.

System 100 comprises a positioning server 200 and a plurality of radio devices 300-1 to 300-5. Optionally, system 100 may comprise a mobile device 400. It is to be understood that system 100 may comprise further radio devices and mobile devices. In the following, it is thus referred to radio devices 300-1 to 300-5 and mobile device 400 without limiting the scope of the invention.

Indoor radio positioning system 100 is not limited to a single positioning server 200, but may optionally comprise a plurality of servers (e.g. forming a server cloud). Accordingly, the positioning server 200 may be part of such a plurality of servers (e.g. a server cloud) or may be represented by such a plurality of servers (e.g. a server cloud).

In system 100, positioning server 200 and mobile device 400 may be configured to communicate with each other as indicated by communication path 101. It is to be understood that communication path 101 may comprise one or more communication links (e.g. one or more wireless communication links or one or more wireline communication links or a combination thereof). For example, communication path 101 may include one or more communication links over one or more communication networks. For example, communication path 101 is or includes a communication link over a cellular communication network like a 2G/3G/4G/5G cellular communication network. The 2G/3G/4G/5G cellular radio communication standards are developed by the 3GPP and presently available under http://www.3gpp.org/.

Positioning server 200 may be configured for generating and updating radio map information representing a radio map covering the indoor environment of system 100 (e.g. based on a plurality of radio observation reports as disclosed in more detail above). The radio map may be configured to enable mobile device 400 to estimate its position at least partially based on this radio map when the mobile device is located in the indoor environment of system 100 which is covered by the radio map. Positioning server 200 may provide (e.g. transmit) the radio map information to mobile device 400 via communication paths 101.

Radio devices 300-1 to 300-5 may be WLAN access points fixedly installed in the indoor environment of system 100 and may be configured for transmitting and receiving WLAN radio signals. For example, they may be configured for automatically and repeatedly transmitting WLAN radio signals. In particular, they may be configured to support WLAN according to the IEEE 802.11mc standard which specifies a solution for determining round-trip-time (RTT) values associated with (a) WLAN radio signal(s) travelling between two WLAN devices (e.g. a respective WLAN access point of WLAN access points 300-1 to 300-5 and mobile device 400). It is to be understood that system 100 is not limited to WLAN access points as radio devices 300-1 to 300-5. In the following, it is thus referred to radio devices 300-1 to 300-5 as WLAN access points 300-1 to 300-5 for exemplary purposes only without limiting the scope of the invention.

For example, mobile device 400 may be one of a smartphone, a tablet computer, a notebook computer, a smart watch and a smart band. Mobile device 400 may be configured for transmitting and receiving WLAN radio signals.

Moreover, mobile device 400 may be configured for estimating its position based on observed (e.g. received) WLAN radio signals and the radio map represented by the radio map information. In particular, mobile device 400 may for example use the radio map information (e.g. the radio map represented by the radio map information) provided by the positioning server 200 to mobile device 400 to estimate an observation position based on at least three WLAN radio signals observed (e.g. received) by mobile device 400 at the observation position as disclosed above in more detail.

Furthermore, mobile device 400 may be configured for estimating its position based on round-trip-times associated with observed (e.g. received) WLAN radio signals. To this end, mobile device 400 may be configured to support WLAN according to the IEEE 802.11mc standard. Based on at least three RTT values of WLAN radio signals transmitted by at least three different WLAN access points of WLAN access points 300-1 to 300-5 and observed by mobile device 400 at an observation position, the observation position of mobile device 400 may be estimated as disclosed above in more detail.

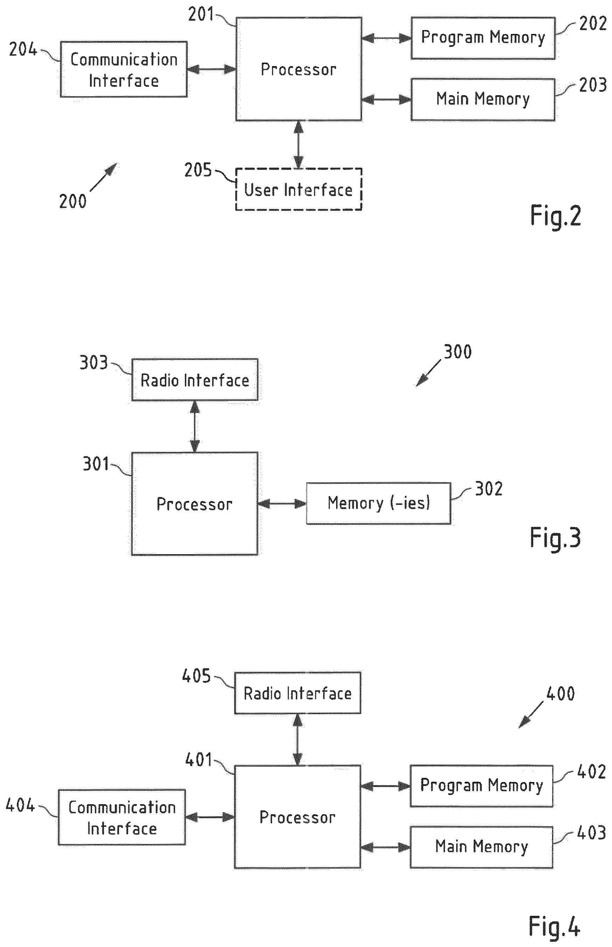

Fig. 2 is a block diagram of an exemplary embodiment of an apparatus according to the invention. In the following, it is assumed that this apparatus corresponds to positioning server 200 of system 100 of Fig. 1.

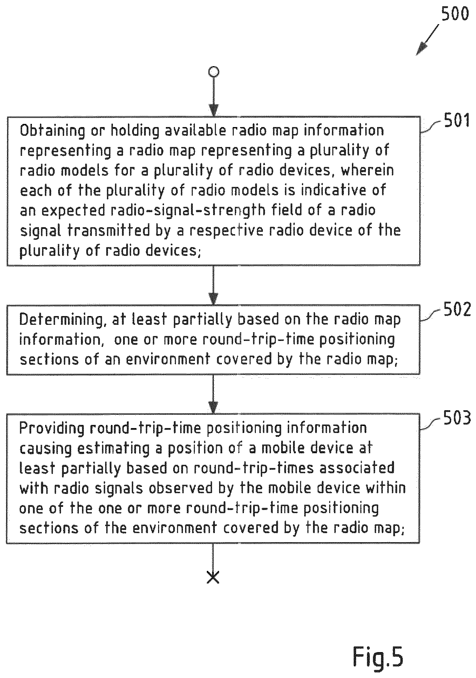

Positioning server 200 comprises a processor 201. Processor 201 may represent a single processor or two or more processors, which are for instance at least partially coupled, for instance via a bus. Processor 201 executes a program code stored in program memory 202 (for instance program code causing positioning server 200 to perform one or more of the embodiments of a method according to the invention or parts thereof (e.g. the method or parts of the method disclosed below with reference to flowchart 500 of Fig. 5), when executed on processor 201), and interfaces with a main memory 203. Program memory 202 may also contain an operating system for processor 201. Some or all of memories 202 and 203 may also be included into processor 201.

One of or both of a main memory and a program memory of a processor (e.g. program memory 202 and main memory 203) could be fixedly connected to the processor (e.g. processor 201) or at least partially removable from the processor, for instance in the form of a memory card or stick.

A program memory (e.g. program memory 202) may for instance be a non-volatile memory. It may for instance be a FLASH memory (or a part thereof), any of a ROM, PROM, EPROM, MRAM or a FeRAM (or a part thereof) or a hard disc (or a part thereof), to name but a few examples. For example, a program memory may for instance comprise a first memory section that is fixedly installed, and a second memory section that is removable from, for instance in the form of a removable SD memory card.

A main memory (e.g. main memory 203) may for instance be a volatile memory. It may for instance be a DRAM memory, to give non-limiting example. It may for instance be used as a working memory for a processor (e.g. processor 201) when executing an operating system and/or programs.

Processor 201 further controls a communication interface 204 which is for example configured to communicate via a network like a cellular communication network. Positioning server 200 may use communication interface 204 to communicate with mobile device 400 (e.g. via communication path 101).

Furthermore, processor 201 controls an optional user interface 205 configured to present information to a user of positioning server 200 and/or to receive information from such a user. User interface 205 may for instance be the standard user interface via which a user of positioning server 200 controls other functionality thereof. Examples of such a user interface are a touch-sensitive display, a keyboard, a touchpad, a display, etc.

The components 202 to 205 of positioning server 200 may for instance be connected with processor 201 by means of one or more serial and/or parallel busses.

It is to be understood that positioning server 200 may comprise various other components.

Fig. 3 is a block diagram of an exemplary embodiment of a radio device according to the invention. In the following, it is assumed that this radio device corresponds to a WLAN access point 300 like WLAN access points 300-1 to 300-5 of system 100.

WLAN access point 300 comprises a processor 301. Processor 301 may represent a single processor or two or more processors, which are for instance at least partially coupled, for instance via a bus. Processor 301 executes a program code stored in memory 302. Some or all of memory 302 may also be included into processor 301. Memory 302 may for instance be a volatile or non-volatile memory. It may for instance be a RAM or DRAM memory. It may for instance be a FLASH memory (or a part thereof), any of a ROM, PROM, EPROM, EEPROM, MRAM or a FeRAM (or a part thereof) and/or a hard disc (or a part thereof), to name but a few examples. It may for instance be used as a working memory for processor 301 when executing an operating system and/or programs. Memory 302 may also comprise an operating system for processor 301. Memory 302 may for instance comprise a first memory portion that is fixedly installed in WLAN access point 300, and a second memory portion that is removable from WLAN access point 300, for instance in the form of a removable SD memory card.

Processor 301 further controls a radio interface 303 configured to receive and/or transmit WLAN radio signals. For instance, radio interface 303 may at least comprise a WLAN component including a WLAN transmitter (TX). The radio interface 303 may additionally comprise a WLAN receiver (RX). The transmitter and receiver may also be part of a WLAN transceiver (TRX). The WLAN transmitter enables WLAN access point 300 to transmit WLAN radio signals. Likewise, the WLAN receiver enables WLAN access point 300 to receive WLAN radio signals. Moreover, the radio interface 303 may be configured to support determining one or more round-trip-time values according to the IEEE 802.11mc standard, for example by capturing times-of-arrival and/or times-of -departure as disclosed above in more detail. It is to be understood that any computer program code based processing required for receiving and processing received WLAN radio signals may be stored in an own memory of the radio interface 303 and executed by an own processor of the radio interface 303 or it may be stored for example in memory 302 and executed for example by processor 301.

The components 302 to 303 of WLAN access point 300 may for instance be connected with processor 301 by means of one or more serial and/or parallel busses.

It is to be understood that WLAN access point 300 may comprise various other components.

Fig. 4 is a block diagram of an exemplary embodiment of a mobile device 400 according to the invention. In the following, it is assumed that this mobile device 400 corresponds to mobile device 400 of system 100 of Fig. 1.

Mobile device 400 comprises a processor 401. Processor 401 may represent a single processor or two or more processors, which are for instance at least partially coupled, for instance via a bus. Processor 401 executes a program code stored in program memory 402 and interfaces with a main memory 403. Program memory 402 may also comprise an operating system for processor 401. Some or all of memories 402 and 403 may also be included into processor 401.

Processor 401 controls a communication interface 404 which is for example configured to communicate via a network like a cellular communication network. Mobile device 400 may use communication interface 404 to communicate with positioning server 200 (e.g. via communication path 101).

Moreover, processor 401 controls radio interface 405 configured to receive and/or transmit WLAN radio signals. For instance, radio interface 405 may at least comprise a WLAN component including a WLAN transmitter (TX). The radio interface 405 may additionally comprise a WLAN receiver (RX). The transmitter and receiver may also be part of a WLAN transceiver (TRX). The WLAN transmitter enables mobile device 400 to transmit WLAN radio signals. Likewise, the WLAN receiver enables mobile device 400 to receive WLAN radio signals. Moreover, the radio interface 405 may be configured to support determining one or more round-trip-time values according to the IEEE 802.11mc standard, for example by capturing times-of-arrival and/or times-of-departure as disclosed above in more detail. It is to be understood that any computer program code based processing required for receiving and processing received WLAN radio signals may be stored in an own memory of the radio interface 405 and executed by an own processor of the radio interface 405 or it may be stored for example in memory 402 and executed for example by processor 401.

The components 402 to 405 of mobile device 400 may for instance be connected with processor 401 by means of one or more serial and/or parallel busses.

It is to be understood that mobile device 400 may comprise various other components. For example, mobile device 400 may optionally comprise a user interface (e.g. a touch-sensitive display, a keyboard, a touchpad, a display, etc).

Fig. 5 is a flow chart 500 illustrating an exemplary embodiment of a method according to the invention. Without limiting the scope of the invention, it is assumed in the following that positioning server 200 of indoor radio positioning system 100 as described above with respect to Fig. 1 performs the steps of flowchart 500.

In a step 501, radio map information representing the radio map representing a plurality of radio models for the plurality of WLAN radio access points 300-1 to 300-5 is obtained or hold available. In the following, it is assumed that the radio map information representing the radio map has been obtained as a result of generating or updating the radio map and stored in program memory 202. Accordingly, the radio map may be considered to be an existing radio map.

Each of the plurality of radio models for the plurality of WLAN radio access points 300-1 to 300-5 is indicative of an expected radio-signal-strength field of a WLAN radio signal transmitted by a respective WLAN access point of the plurality of WLAN radio access points 300-1 to 300-5. To this end, each of the plurality of radio models may represent at least one of (1) the expected radio-signal-strength value of a WLAN radio signal transmitted by a respective WLAN access point of the plurality of WLAN radio access points 300-1 to 300-5 at one or more positions (e.g. at any position or at any position of a plurality of predetermined positions like a predetermined grid of positions) in the environment covered by the radio map or (2) the expected path-loss (and, optionally, transmission power) of a radio signal transmitted by a respective radio device of the plurality of radio devices or (3) a combination thereof. To give a non-limiting example, such a radio model may be a soft-boundary model like a parametric model like a path-loss model or a grid model like a radio-signal-strength heatmap.

In the following, it is assumed that each of the plurality of radio models is a respective path-loss model for a WLAN radio signal transmitted by a respective WLAN access point of the plurality of WLAN radio access points 300-1 to 300-5 which is represented by a respective path-loss exponent experienced by the WLAN radio signal transmitted by the respective WLAN access point, a respective transmission power value used by the transmitter of the respective WLAN access point and an installation position of the respective WLAN access point (e.g. in the form of geographical coordinates).

In a step 502, one or more round-trip-time positioning sections of the indoor environment of system 100 covered by the radio map are determined at least partially based on the radio map information.

In the following, it is assumed that the one or more round-trip-time positioning sections of the indoor environment covered by the radio map are determined such that the following conditions are met for each of the one or more round-trip-time positioning sections:

(1) at least a predetermined number of 3 radio signals having a radio-signal-strength value exceeding or being equal to a predetermined radio-signal-strength threshold of -65 dBm is expected to be observable within the respective round-trip-time positioning section of the one or more round-trip-time positioning sections;

(2) a maximum dilution-of-precision (DOP) value for the respective round-trip-time positioning section of the one or more round-trip-time positioning sections is expected to be less than or equal to a predetermined dilution-of-precision threshold of 2.5.

If each of the one or more round-trip-time positioning sections meets both conditions, it may be expected that round-trip-time based positioning is possible (e.g. with a predetermined or desired minimum accuracy) in each of one or more round-trip-time positioning sections. In particular, the predetermined number of 3 WLAN radio signals, the predetermined radio-signal-strength threshold of -65 dBm and the predetermined dilution-of-precision threshold of 2.5 may be predetermined (e.g. predefined) such that it is expected that round-trip-time based positioning is possible (e.g. with a predetermined or desired minimum accuracy) in each of one or more round-trip-time positioning sections meeting both conditions.

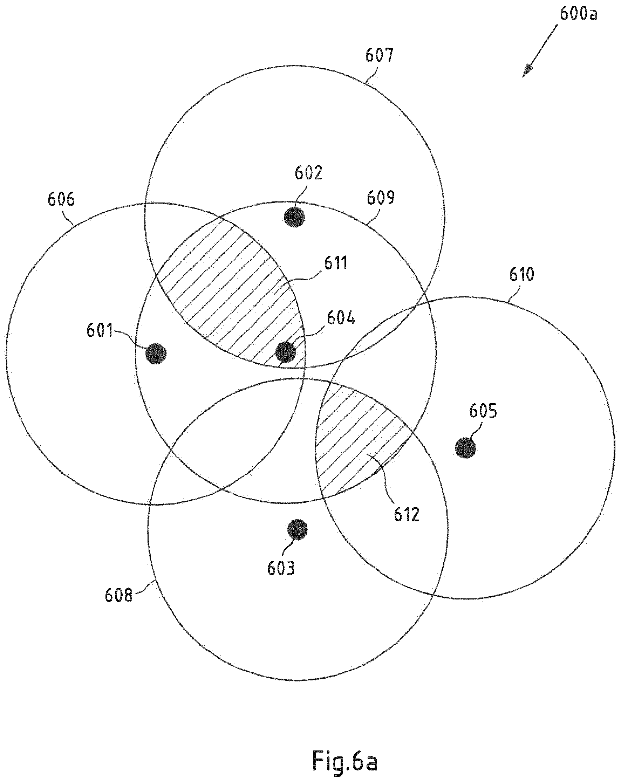

As disclosed in the following with reference to Fig. 6a to 6c, the one or more round-trip-time positioning sections of the environment covered by the radio map may be determined at least partially based on the plurality of radio models represented by the radio map represented by the radio map information obtained or hold available in step 501. As disclosed above, it is assumed in the following that each of the plurality of radio models is a respective path-loss model for a WLAN radio signal transmitted by a respective WLAN access point of the plurality of WLAN radio access points 300-1 to 300-5 and that each of the plurality of path-loss models is represented by a respective path-loss exponent experienced by the WLAN radio signal transmitted by the respective WLAN access point, a respective transmission power value used by the transmitter of the respective WLAN access point and an installation position of the respective WLAN access point.

Fig. 6a to 6c show exemplary radio map views 600a to 600c which represent (intermediate) results of determining the one or more round-trip-time positioning sections of the indoor environment of system 100 covered by the radio map at least partially based on the plurality of path-loss models for the plurality of WLAN radio access points 300-1 to 300-5 represented by the radio map represented by the radio map information.

Installation positions 601 to 605 of radio map views 600a to 600c correspond to the installation positions of WLAN radio access points 300-1 to 300-5, respectively, as represented by the plurality of path-loss models for the plurality of WLAN radio access points 300-1 to 300-5.

To determine the one or more round-trip-time positioning sections of the environment covered by the radio map such that the first condition is met, the determining in step 502 may for example comprise:

- determining, for one or more positions (e.g. any position or any position of a plurality of predetermined positions like a predetermined grid of positions) within the indoor environment of system 100 covered by the radio map, a respective number of WLAN radio signals transmitted by the plurality of WLAN radio access points 300-1 to 300-5 which is expected to be observable with a radio-signal-strength value exceeding or being equal to the predetermined radio-signal-strength threshold of -65 dBm; and
- determining the one or more round-trip-time positioning sections such that the one or more round-trip-time positioning sections only comprise the one or more positions within the environment covered by the radio map for which it is determined that the respective number of WLAN radio signals transmitted by the plurality of WLAN radio access points 300-1 to 300-5 which is expected to be observable with a radios-signal-strength value exceeding or being equal to the predetermined radio-signal-strength threshold of -65 dBm is equal to or exceeds the predetermined number of 3 WLAN radio signals.

A result of these determining steps is represented by radio map view 600a of Fig. 6a. Each of circular sections 606 to 610 of radio map view 600a represents a respective section of the indoor environment of system 100 covered by the radio map within which it is expected that a respective WLAN radio signal transmitted by a respective WLAN radio access point of the plurality of WLAN radio access points 300-1 to 300-5 is observable (e.g. receivable) at any position at least with the predetermined radio-signal-strength threshold of -65 dBm. For example, it may be expected, based on the path-loss model of WLAN radio access point 300-1 installed at installation position 601, that a WLAN radio signal transmitted by WLAN radio access point 300-1 is observable (e.g. receivable) at any position within circular section 606 at least with the predetermined radio-signal-strength threshold of -65 dBm. For example, the respective radius of each of the circular sections 606 to 610 may be determined in step 502 based on the respective path-loss exponent and the respective transmission power value represented by the respective path-loss model of the plurality of radio models as well as the predetermined radio-signal-strength threshold of -65 dBm.

In hatched sections 611 and 612 of radio map view 600a, at least 3 sections of circular sections 606 to 610 overlap such that it is expected that at any position of hatched sections 611 and 612 at least 3 WLAN radio signals (i.e. the predetermined number of 3 radio signals) are observable with a radio-signal-strength value exceeding or being equal to the predetermined radio-signal-strength threshold of -65 dBm. Accordingly hatched sections 611 and 612 may be determined in step 502 to meet the first condition as specified above.

To determine the one or more round-trip-time positioning sections of the environment covered by the radio map such that the second condition is met, the determining in step 502 may for example comprise:

- determining, for one or more positions (e.g. any position or any position of a plurality of predetermined positions like a predetermined grid of positions) within the indoor environment of system 100 covered by the radio map, a respective expected dilution-of-precision (DOP) value; and
- determining the one or more round-trip-time positioning sections such that the one or more round-trip-time positioning sections only comprise the one or more positions within the indoor environment of system 100 covered by the radio map for which it is determined that the respective expected dilution-of-precision (DOP) value is less than or equal to the predetermined dilution-of-precision threshold of 2.5.

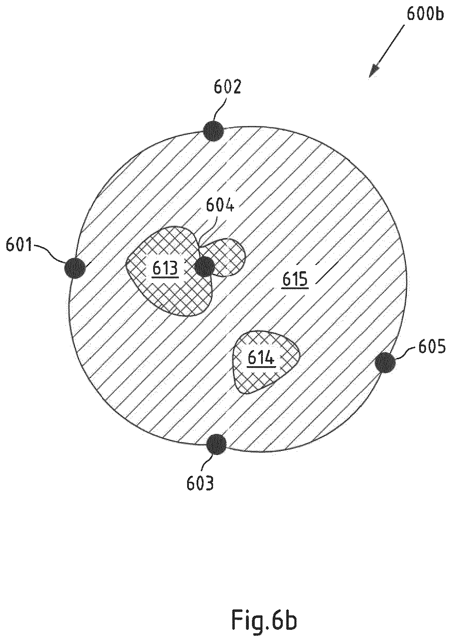

A result of these determining steps is represented by radio map view 600b of Fig. 6b. Each of crosshatched sections 613 and 614 of radio map view 600b represents a respective section of the indoor environment of system 100 covered by the radio map within which the respective expected DOP value is equal to 1.0 at any position. Moreover, hatched section 615 of radio map view 600b represents a section of the indoor environment of system 100 covered by the radio map within which the respective expected dilution-of-precision value is less than or equal to the predetermined DOP threshold of 2.5. Accordingly hatched section 615 may be determined in step 502 to meet the second condition as specified above.

For example, hatched section 615 of radio map view 600b may be determined in step 502 by determining for any position within the indoor environment of system 100 covered by the radio map the respective expected dilution-of-precision value. As disclosed above, the respective expected dilution-of-precision (DOP) values for any position within the indoor environment of system 100 covered by the radio map may be a respective expected geometric dilution-of-precision (GDOP) value or a respective expected positional dilution-of-precision (PDOP) value which may for example be determined (e.g. estimated and/or computed) as outlined in the article "Dilution of precision." (i.e. " Langley, Richard B. "Dilution of precision." GPS world 10.5 (1999): 52-59.").

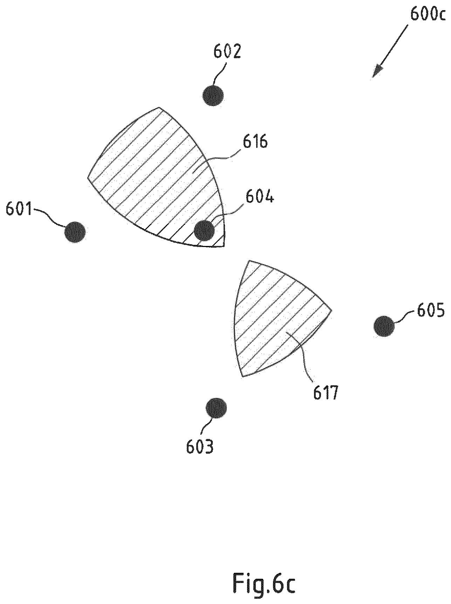

The one or more round-trip-time positioning sections 616 and 617 of radio map view 600c of Fig. 6c may then be determined in step 502 to correspond to the overlapping portions of (1) hatched sections 611 and 612 of radio map view 600a of Fig. 6a and (2) hatched section 615 of radio map view 600b of Fig. 6b. By this, the first condition and the second condition are both met in round-trip-time positioning sections 616 and 617.

This is for example advantageous because it provides a simple solution for determining the one or more round-trip-time positioning sections, in particular for determining the one or more round-trip-time positioning sections of the indoor environment of system 100 covered by an already existing radio map.

In a step 503, round-trip-time positioning information is provided. For example, the round-trip-time positioning information is provided in step 503 by transmitting the round-trip-time positioning information via communication paths 101 to mobile device 400.

The round-trip-time positioning information cause estimating a position of mobile device 400 at least partially based on round-trip-times associated with WLAN radio signals observed by mobile device 400 within one of the one or more round-trip-time positioning sections 616 and 617 of the indoor environment of system 100 covered by the radio map. This may be understood to mean that the round-trip-time positioning information are configured to control mobile device 400 to estimate an observation position of mobile device 400 at least partially based on round-trip-times associated with WLAN radio signals observed by mobile device 400 at this observation position if these WLAN radio signals are observed by mobile device 400 within one of round-trip-time positioning sections 616 and 617 (i.e. the observation position is within one of round-trip-time positioning sections 616 and 617). To this end, the round-trip-time positioning information may be indicative of round-trip-time positioning sections 616 and 617 of the indoor environment of system 100 covered by the radio map, for example by representing round-trip-time positioning sections 616 and 617 (e.g. by representing geographic coordinates defining round-trip-time positioning sections 616 and 617). Accordingly, if mobile device estimates, based on the radio map represented by the radio map information and WLAN radio signals observed at an observation position, that the observation position is within one of round-trip-time positioning sections 616 and 617 indicated by the round-trip-time positioning information, mobile device may be caused (e.g. controlled) by the round-trip-time positioning information to proceed with estimating the observation position based on round-trip-times associated with the WLAN radio signals observed at the observation position.

This is for example advantageous because round-trip-time based positioning is expected to be more accurate (than position estimating based on the radio map and the observed radio signals) in round-trip-time positioning sections of the environment of indoor positioning system 100 meeting one or both of the conditions specified above.

It is to be understood that the orders of the steps of flowchart 500 is only exemplary and that the steps may also have a different order if possible. Furthermore, it is also possible that two or more steps may be performed in one step.

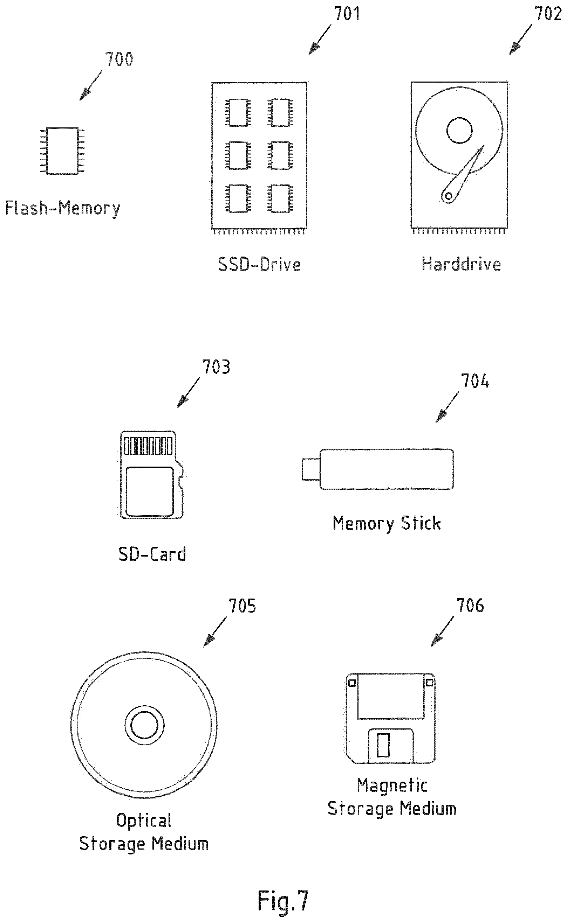

Fig. 7 is a schematic illustration of examples of tangible and non-transitory computer-readable storage media according to the present invention that may for instance be used to implement memory 202 of Fig. 2, memory 302 of Fig. 3 and memory 402 of Fig. 4. To this end, Fig. 7 displays a flash memory 700, which may for instance be soldered or bonded to a printed circuit board, a solid-state drive 701 comprising a plurality of memory chips (e.g. Flash memory chips), a magnetic hard drive 702, a Secure Digital (SD) card 703, a Universal Serial Bus (USB) memory stick 704, an optical storage medium 705 (such as for instance a CD-ROM or DVD) and a magnetic storage medium 706.

Any presented connection in the described embodiments is to be understood in a way that the involved components are operationally coupled. Thus, the connections can be direct or indirect with any number or combination of intervening elements, and there may be merely a functional relationship between the components.

Further, as used in this text, the term 'circuitry' refers to any of the following:

(a) hardware-only circuit implementations (such as implementations in only analog and/or digital circuitry)

(b) combinations of circuits and software (and/or firmware), such as: (i) to a combination of processor(s) or (ii) to sections of processor(s)/ software (including digital signal processor(s)), software, and memory(ies) that work together to cause an apparatus, such as a mobile phone, to perform various functions) and

(c) to circuits, such as a microprocessor(s) or a section of a microprocessor(s), that re-quire software or firmware for operation, even if the software or firmware is not physically present.

This definition of 'circuitry' applies to all uses of this term in this text, including in any claims. As a further example, as used in this text, the term 'circuitry' also covers an implementation of merely a processor (or multiple processors) or section of a processor and its (or their) accompanying software and/or firmware. The term 'circuitry' also covers, for example, a baseband integrated circuit or applications processor integrated circuit for a mobile phone.

Any of the processors mentioned in this text, in particular but not limited to processors 201, 301 and 401 of Figs. 2, 3 and 4, could be a processor of any suitable type. Any processor may comprise but is not limited to one or more microprocessors, one or more processor(s) with accompanying digital signal processor(s), one or more processor(s) without accompanying digital signal processor(s), one or more special-purpose computer chips, one or more field-programmable gate arrays (FPGAS), one or more controllers, one or more application-specific integrated circuits (ASICS), or one or more computer(s). The relevant structure/hardware has been programmed in such a way to carry out the described function.

Moreover, any of the actions or steps described or illustrated herein may be implemented using executable instructions in a general-purpose or special-purpose processor and stored on a computer-readable storage medium (e.g., disk, memory, or the like) to be executed by such a processor. References to 'computer-readable storage medium' should be understood to encompass specialized circuits such as FPGAs, ASICs, signal processing devices, and other devices.

The wording "A, or B, or C, or a combination thereof" or "at least one of A, B and C" may be understood to be not exhaustive and to include at least the following: (i) A, or (ii) B, or (iii) C, or (iv) A and B, or (v) A and C, or (vi) B and C, or (vii) A and B and C.

It will be understood that all presented embodiments are only exemplary, and that any feature presented for a particular exemplary embodiment may be used with any aspect of the invention on its own or in combination with any feature presented for the same or another particular exemplary embodiment and/or in combination with any other feature not mentioned. It will further be understood that any feature presented for an example embodiment in a particular category may also be used in a corresponding manner in an example embodiment of any other category.

**Claims**

1. A method, comprising:

- obtaining or holding available (501) radio map information representing a radio map representing a plurality of radio models for a plurality of radio devices (300-1 to 300-5), wherein each of said plurality of radio models is indicative of an expected radio-signal-strength field of a radio signal transmitted by a respective radio device of said plurality of radio devices (300-1 to 300-5); wherein the method further comprises
- determining (502), at least partially based on said radio map information, one or more round-trip-time positioning sections (616, 617) of an environment covered by said radio map;
- providing (503) round-trip-time positioning information causing estimating a position of a mobile device (400) at least partially based on round-trip-times associated with radio signals observed by said mobile device (400) within one of said one or more round-trip-time positioning sections (616, 617) of said environment covered by said radio map, wherein said one or more round-trip-time positioning sections (616, 617) of said environment covered by said radio map are determined such that the following conditions are met for each of said one or more round-trip-time positioning sections (616, 617):

- at least a predetermined number of radio signals having a radio-signal-strength value exceeding or being equal to a predetermined radio-signal-strength threshold is expected to be observable within said respective round-trip-time positioning section of said one or more round-trip-time positioning sections (616, 617) wherein each of said radio signals of said at least predetermined number of radio signals is transmitted by a different radio device of said plurality of radio devices (300-1 to 300-5); and **characterized in** the condition that :

- a maximum dilution-of-precision value for said respective round-trip-time positioning section of said one or more round-trip-time positioning sections (616, 617) is expected to be less than or equal to a predetermined dilution-of-precision threshold.

2. Method according to claim 1, wherein said method further comprises:

- determining, for one or more positions within said environment covered by said radio map, a respective number of radio signals transmitted by said plurality of radio devices (300-1 to 300-5) which is expected to be observable with a radio-signal-strength value exceeding or being equal to said predetermined radio-signal-strength threshold at least partially based on said plurality of radio models.

3. Method according to any of claims 1 to 2, said method further comprising:

    - determining, for one or more positions within said environment covered by said radio map, a respective expected dilution-of-precision value

4. Method according to any of claims 1 to 3, said method further comprising:

    - determining, at least partially based on said radio map information, a respective installation position (601 to 605) for each of said plurality of radio devices (300-1 to 300-5).

5. Method according to any of claims 1 to 4, wherein said radio map information is indicative of a respective installation position (601 to 605) for each of said plurality of radio devices (300-1 to 300-5).

6. Method according to any of claims 1 to 5, wherein each of said plurality of radio devices (300-1 to 300-5) is configured to support round-trip-time based positioning, and/or wherein said radio map information is indicative of which radio devices of said plurality of radio devices (300-1 to 300-5) are configured to support round-trip-time based positioning.

7. Method according to any of claims 1 to 6, said method further comprising:

    - updating said radio map information by adding said round-trip-time positioning information to said radio map information.

8. Method according to any of claims 1 to 7, said method further comprising:

    - estimating said position of said mobile device (400) at least partially based on round-trip-times associated with radio signals observed by said mobile device (400) within one of said one or more round-trip-time positioning sections (616, 617).

9. Method according to any of claims 1 to 8, said method further comprising:

    - at least one of receiving or collecting a plurality of radio observation reports captured by one or more mobile devices within said environment covered by said radio map;
    - generating or updating said radio map information at least partially based on said plurality of radio observation reports.

10. Method according to any of claims 1 to 9, wherein said plurality of radio devices (300-1 to 300-5) comprises one or more of the following:

    - a WLAN radio device;
    - a cellular radio device.

11. A computer program code, the computer program code when executed by a processor (201) of an apparatus (200) causing said apparatus (200) to perform the method according to any of claims 1 to 10.

12. An apparatus (200) comprising means (201 to 205) for performing the method according to any of claims 1 to 10.

13. A system comprising at least a server (200) and a mobile device (400), wherein said server (200) and said mobile device (400) are configured to cooperate for performing the method according to any of claims 1 to 10.

**Patentansprüche**

1. Verfahren, umfassend:

    - Erhalten oder Bereitstellen (501) von Funkkarteninformationen, die eine Funkkarte darstellen, welche eine Vielzahl von Funkmodellen für eine Vielzahl von Funkvorrichtungen (300-1 bis 300-5) repräsentiert, wobei jedes dieser Vielzahl von Funkmodellen das zu erwartende Funksignalstärkefeld eines von einer jeweiligen Funkvorrichtung der Vielzahl von Funkvorrichtungen (300-1 bis 300-5) gesendeten Funksignals anzeigt; wobei das Verfahren ferner umfasst
    - Bestimmen (502), mindestens teilweise auf der Grundlage der genannten Funkkarteninformationen, eines oder mehrerer Laufzeit-Positionsabschnitte (616, 617) einer von der genannten Funkkarte abgedeckten Umgebung;
    - Bereitstellen (503) von Laufzeit-Positionsinformationen, die die Schätzung einer Position einer mobilen Vorrichtung (400) mindestens teilweise auf der Grundlage der Laufzeiten von Funksignalen ermöglichen, die von der mobilen Vorrichtung (400) innerhalb eines von einem oder mehreren Laufzeit-Positionsabschnitte (616, 617) der von der Funkkarte abgedeckten Umgebung erfasst werden, wobei der eine oder die mehreren Laufzeit-Positionsabschnitte (616, 617) der von der Funkkarte abgedeckten Umgebung so bestimmt werden, dass für jeden des einen oder mehreren Laufzeit-Positionsabschnitte (616, 617) die folgenden Bedingungen erfüllt sind:

- Mindestens eine vorbestimmte Anzahl von Funksignalen, deren Funksignalstärke einen vorbestimmten Schwellenwert überschreitet oder erreicht, wird innerhalb des jeweiligen Laufzeit-Positionsabschnitts des oder der Laufzeit-Positionsabschnitte (616, 617) voraussichtlich beobachtbar sein, wobei jedes dieser Funksignale der mindestens einen vorbestimmten Anzahl von Funksignalen von einer anderen Funkvorrichtung der Vielzahl von Funkvorrichtungen (300-1 bis 300-5) gesendet wird; und **gekennzeichnet durch** die Bedingung, dass:

- ein maximaler Wert für die Präzisionsverdünnung des jeweiligen Laufzeit-Positionsabschnitts des einen oder mehreren Laufzeit-Positionsabschnitte (616, 617) voraussichtlich kleiner oder gleich einem vorbestimmten Schwellenwert für die Präzisionsverdünnung sein wird.

2. Verfahren nach Anspruch 1, wobei das Verfahren ferner Folgendes umfasst:

- Bestimmen, für eine oder mehrere Positionen innerhalb der von der Funkkarte abgedeckten Umgebung, einer jeweiligen Anzahl von Funksignalen, die von der Vielzahl von Funkvorrichtungen (300-1 bis 300-5) ausgesendet werden und die voraussichtlich mit einem Funksignalstärkewert, der den vorgegebenen Schwellenwert für die Funksignalstärke überschreitet oder ihm entspricht, mindestens teilweise auf der Grundlage der Vielzahl von Funkmodellen beobachtet werden können.

3. Verfahren nach einem der Ansprüche 1 bis 2, wobei das Verfahren ferner Folgendes umfasst:

- Bestimmen eines jeweiligen voraussichtlichen Präzisionsverdünnungswertes für eine oder mehrere Positionen innerhalb der von der Funkkarte abgedeckten Umgebung

4. Verfahren nach einem der Ansprüche 1 bis 3, wobei das Verfahren ferner Folgendes umfasst:

- Bestimmen, mindestens teilweise auf der Grundlage der Funkkarteninformationen, einer jeweiligen Installationsposition (601 bis 605) für jedes der Vielzahl von Funkvorrichtungen (300-1 bis 300-5).

5. Verfahren nach einem der Ansprüche 1 bis 4, wobei die Funkkarteninformationen eine jeweilige Installationsposition (601 bis 605) für jedes der Vielzahl von Funkvorrichtungen (300-1 bis 300-5) anzeigen.

6. Verfahren nach einem der Ansprüche 1 bis 5, wobei jedes der Vielzahl von Funkvorrichtungen (300-1 bis 300-5) zur Unterstützung der auf der Laufzeit-basierenden Positionsbestimmung konfiguriert ist, und/oder wobei die Funkkarteninformationen anzeigen, welche Funkvorrichtungen der Vielzahl von Funkvorrichtungen (300-1 bis 300-5) für die Unterstützung der Laufzeit-basierenden Positionsbestimmung konfiguriert sind.

7. Verfahren nach einem der Ansprüche 1 bis 6, wobei das Verfahren ferner Folgendes umfasst:

- Aktualisieren der Funkkarteninformationen durch Hinzufügen der Laufzeit-Positionsinformationen zu den Funkkarteninformationen.

8. Verfahren nach einem der Ansprüche 1 bis 7, wobei das Verfahren ferner umfasst:

- Schätzen der Position der mobilen Vorrichtung (400) mindestens teilweise auf der Grundlage der Laufzeiten der Funksignale, die die mobile Vorrichtung (400) innerhalb eines oder mehrerer der Laufzeit-Positionsabschnitte (616, 617) empfängt.

9. Verfahren nach einem der Ansprüche 1 bis 8, wobei das Verfahren ferner Folgendes umfasst:

- mindestens eines von Empfangen oder Sammeln einer Vielzahl von Funkbeobachtungsberichten, die von einer oder mehreren mobilen Vorrichtungen innerhalb der von der Funkkarte abgedeckten Umgebung erfasst wurden;
- Erstellen oder Aktualisieren der genannten Funkkarteninformationen mindestens teilweise auf der Grundlage der genannten Vielzahl von Funkbeobachtungsberichten.

10. Verfahren nach einem der Ansprüche 1 bis 9, wobei die Vielzahl von Funkvorrichtungen (300-1 bis 300-5) eines oder mehrere der Folgenden umfasst:

- eine WLAN-Funkvorrichtung;

- eine zellulare Funkvorrichtung.

11. Computerprogrammcode, der, wenn er von einem Prozessor (201) einer Einrichtung (200) ausgeführt wird, bewirkt, dass die Einrichtung (200) das Verfahren nach einem der Ansprüche 1 bis 10 durchführt.

12. Einrichtung (200) umfassend Mitteln (201 bis 205) zum Durchführen des Verfahrens nach einem der Ansprüche 1 bis 10.

13. System, umfassend mindestens einen Server (200) und eine mobile Vorrichtung (400), wobei der Server (200) und die mobile Vorrichtung (400) so konfiguriert sind, dass sie für die Durchführung des Verfahrens nach einem der Ansprüche 1 bis 10 zusammenwirken.

**Revendications**

1. Procédé, comprenant :

- l'obtention ou le maintien de la disponibilité (501) d'informations de cartographie radio représentant une cartographie radio représentant une pluralité de modèles radio pour une pluralité de dispositifs radio (300-1 à 300-5), dans lequel chacun de ladite pluralité de modèles radio indique un champ de puissance de signal radio attendu d'un signal radio émis par un dispositif radio respectif de ladite pluralité de dispositifs radio (300-1 à 300-5) ; dans lequel le procédé comprend en outre
- la détermination (502), au moins partiellement sur la base desdites informations de cartographie radio, d'une ou plusieurs sections de positionnement basé sur le temps aller-retour (616, 617) d'un environnement couvert par ladite cartographie radio ;
- la fourniture (503) d'informations de positionnement basé sur le temps aller-retour permettant d'estimer la position d'un dispositif mobile (400) au moins partiellement sur la base de temps aller-retour associés à des signaux radio observés par ledit dispositif mobile (400) dans l'une desdites une ou plusieurs sections de positionnement basé sur le temps aller-retour (616, 617) dudit environnement couvert par ladite cartographie radio, dans lequel lesdites une ou plusieurs sections de positionnement basé sur le temps aller-retour (616, 617) dudit environnement couvert par ladite cartographie radio sont déterminées de manière à ce que les conditions suivantes soient remplies pour chacune desdites une ou plusieurs sections de positionnement basé sur le temps aller-retour (616, 617) :

- au moins un nombre prédéterminé de signaux radio présentant une valeur de puissance de signal radio qui est supérieure ou égale à un seuil prédéterminé de puissance de signal radio sont censés être observables dans ladite section de positionnement basé sur le temps aller-retour respective parmi lesdites une ou plusieurs sections de positionnement basé sur le temps aller-retour (616, 617), dans lequel chacun desdits signaux radio dudit au moins un nombre prédéterminé de signaux radio est émis par un dispositif radio différent de ladite pluralité de dispositifs radio (300-1 à 300-5) ; et **caractérisé par** la condition suivante :

- une valeur maximale de dilution de précision pour ladite section de positionnement basé sur le temps aller-retour respective desdites une ou plusieurs sections de positionnement basé sur le temps aller-retour (616, 617) est censée être inférieure ou égale à un seuil de dilution de précision prédéterminé.

2. Procédé selon la revendication 1, dans lequel ledit procédé comprend en outre :

- la détermination, pour une ou plusieurs positions dans ledit environnement couvert par ladite cartographie radio, d'un nombre respectif de signaux radio émis par ladite pluralité de dispositifs radio (300-1 à 300-5) qui sont censés être observables avec une valeur de puissance de signal radio supérieure ou égale audit seuil de puissance de signal radio prédéterminé au moins partiellement sur la base de ladite pluralité de modèles radio.

3. Procédé selon l'une quelconque des revendications 1 à 2, ledit procédé comprenant en outre :

- la détermination, pour une ou plusieurs positions au sein dudit environnement couvert par ladite cartographie radio, d'une valeur de dilution de précision attendue respective

4. Procédé selon l'une quelconque des revendications 1 à 3, ledit procédé comprenant en outre :

- la détermination, au moins partiellement sur la base desdites informations de cartographie radio, d'une position d'installation (601 à 605) respective pour chacun de ladite pluralité de dispositifs radio (300-1 à 300-5).

5. Procédé selon l'une quelconque des revendications 1 à 4, dans lequel lesdites informations de cartographie radio indiquent une position d'installation (601 à 605) respective pour chacun de ladite pluralité de dispositifs radio (300-1 à 300-5).

6. Procédé selon l'une quelconque des revendications 1 à 5, dans lequel chacun de ladite pluralité de dispositifs radio (300-1 à 300-5) est configuré pour prendre en charge le positionnement basé sur le temps aller-retour, et/ou dans lequel lesdites informations de cartographie radio indiquent quels dispositifs radio parmi la pluralité de dispositifs radio (300-1 à 300-5) sont configurés pour prendre en charge le positionnement basé sur le temps aller-retour.

7. Procédé selon l'une quelconque des revendications 1 à 6, ledit procédé comprenant en outre :

   - la mise à jour desdites informations de cartographie radio en ajoutant lesdites informations de positionnement basé sur le temps aller-retour auxdites informations de cartographie radio.

8. Procédé selon l'une quelconque des revendications 1 à 7, ledit procédé comprenant en outre :

   - l'estimation de ladite position dudit dispositif mobile (400) au moins partiellement sur la base de temps aller-retour associés à des signaux radio observés par ledit dispositif mobile (400) dans l'une desdites une ou plusieurs sections de positionnement basé sur le temps aller-retour (616, 617).

9. Procédé selon l'une quelconque des revendications 1 à 8, ledit procédé comprenant en outre :

   - au moins une de la réception ou de la collecte d'une pluralité de rapports d'observation radio capturés par un ou plusieurs dispositifs mobiles dans ledit environnement couvert par ladite cartographie radio ;
   - la génération ou la mise à jour desdites informations de cartographie radio au moins partiellement sur la base de la pluralité de rapports d'observation radio.

10. Procédé selon l'une quelconque des revendications 1 à 9, dans lequel ladite pluralité de dispositifs radio (300-1 à 300-5) comprend un ou plusieurs parmi :

   - un dispositif radio WLAN ;
   - un dispositif radio cellulaire.

11. Code de programme informatique, le code de programme informatique, lorsqu'il est exécuté par un processeur (201) d'un appareil (200), amenant ledit appareil (200) à réaliser le procédé selon l'une quelconque des revendications 1 à 10.

12. Appareil (200) comprenant des moyens (201 à 205) pour réaliser le procédé selon l'une quelconque des revendications 1 à 10.

13. Système comprenant au moins un serveur (200) et un dispositif mobile (400), dans lequel ledit serveur (200) et ledit dispositif mobile (400) sont configurés pour coopérer afin de réaliser le procédé selon l'une quelconque des revendications 1 à 10.

Fig.1

Fig.2

Fig.3

Fig.4

500

501

Obtaining or holding available radio map information representing a radio map representing a plurality of radio models for a plurality of radio devices, wherein each of the plurality of radio models is indicative of an expected radio-signal-strength field of a radio signal transmitted by a respective radio device of the plurality of radio devices;

502

Determining, at least partially based on the radio map information, one or more round-trip-time positioning sections of an environment covered by the radio map;

503

Providing round-trip-time positioning information causing estimating a position of a mobile device at least partially based on round-trip-times associated with radio signals observed by the mobile device within one of the one or more round-trip-time positioning sections of the environment covered by the radio map;

Fig.5

Fig.6a

Fig.6b

Fig.6c

Fig.7

**EP 3 739 355 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2014253386 A1
- US 2014194137 A1
- US 2018120410 A1
- US 2013337847 A1

**Non-patent literature cited in the description**

- **LANGLEY** ; **RICHARD B**. Dilution of precision. *GPS world*, 1999, vol. 10 (5), 52-59
- **LANGLEY** ; **RICHARD B.** Dilution of precision. *GPS world*, 1999, vol. 10 (5), 52-59
- **LANGLEY** ; **RICHARD B.** Dilution of precision.. *GPS world*, 1999, vol. 10 (5), 52-59